# EUROPÄISCHE PATENTSCHRIFT

(11) **EP 3 878 088 B1**
(45) Veröffentlichungstag und Bekanntmachung des Hinweises auf die Patenterteilung: **06.03.2024**
(21) Anmeldenummer: 19702029.0
(22) Anmeldetag: 18.01.2019
(51) Int. Cl.: H02M 7/483, H02M 1/32, H02M 7/757, H02H 7/12, H02H 3/18, H02H 7/125, H02H 9/04

(54) **ANORDNUNG MIT EINEM MULTILEVELSTROMRICHTER**
ASSEMBLY HAVING A MULTILEVEL POWER CONVERTER
AGENCEMENT COMPORTANT UN CONVERTISSEUR MULTINIVEAUX

(43) Veröffentlichungstag der Anmeldung: 15.09.2021
(73) Patentinhaber: Siemens Energy Global GmbH & Co. KG, 81739 München (DE)
(72) Erfinder: ALVAREZ VALENZUELA, Rodrigo Alonso, 90419 Nürnberg (DE); ERGIN, Dominik, 91083 Baiersdorf (DE); SEMMLER, Sebastian, 90427 Nürnberg (DE); WEILAND, Manuel, 91058 Erlangen (DE)
(86) Internationale Anmeldenummer: PCT/EP2019/051251
(87) Internationale Veröffentlichungsnummer: WO 2020/147966

(56) Entgegenhaltungen:
- CN-A- 106 100 404
- CN-A- 106 100 404
- CN-A- 106 953 509
- CN-A- 106 953 509
- TENCA P ET AL: "A decentralized protection scheme for converters utilizing a DC-link inductor", INDUSTRIAL ELECTRONICS SOCIETY, 2005. IECON 2005. 31ST ANNUAL CONFERENCE OF IEEE, IEEE, PISCATAWAY, NJ, USA, 6. November 2005 (2005-11-06), Seiten 854-859, XP010876053, DOI: 10.1109/IECON.2005.1569016 ISBN: 978-0-7803-9252-6
- P. TUNNERHOFF ET AL: "Fault analysis of HVDC systems with partial underground cabling", 13TH IET INTERNATIONAL CONFERENCE ON AC AND DC POWER TRANSMISSION (ACDC 2017), 1. Januar 2017 (2017-01-01), Seiten 19 (6 .)-19 (6 .), XP055626906, DOI: 10.1049/cp.2017.0019 ISBN: 978-1-78561-421-7
- TENCA P ET AL: "A decentralized protection scheme for converters utilizing a DC-link inductor", INDUSTRIAL ELECTRONICS SOCIETY, 2005. IECON 2005. 31ST ANNUAL CONFERENCE OF IEEE, IEEE, PISCATAWAY, NJ, USA, 6 November 2005 (2005-11-06), pages 854-859, XP010876053, DOI: 10.1109/IECON.2005.1569016 ISBN: 978-0-7803-9252-6
- P. Tunnerhoff ET AL: "Fault analysis of HVDC systems with partial underground cabling", 13th IET International Conference on AC and DC Power Transmission (ACDC 2017), 1 January 2017 (2017-01-01), pages 19 (6 .)-19 (6 .), XP055626906, DOI: 10.1049/cp.2017.0019 ISBN: 978-1-78561-421-7

## Beschreibung

Die Erfindung betrifft eine Anordnung mit einem Multilevelstromrichter, der mindestens ein Phasenmodul aufweist, wobei das Phasenmodul einen Wechselspannungsanschluss, einen ersten Gleichspannungsanschluss und einen zweiten Gleichspannungsanschluss aufweist. Weiterhin betrifft die Anmeldung ein Verfahren zum polaritätsabhängigen Begrenzen einer an einem derartigen Multilevelstromrichter auftretenden Spannung.

Die Patentanmeldung CN 106100404 A offenbart einen Multilevelstromrichter, zwischen dessen Gleichspannungsanschlüsse ein Bypasszweig geschaltet ist, der im Falle eines Fehlers die Gleichspannungsanschlüsse überbrückt. Der Bypasszweig weist einen Thyristor auf.

Die Offenlegungsschrift CN 106953509 A offenbart eine Überspannungsschutzschaltung für ein einzelnes Submodul eines Multilevelstromrichters, welche parallel zu dem Energiespeicher des Submoduls geschaltet ist. Mittels dieses Überspannungsschutzes kann der Energiespeicher gezielt über einen Widerstand entladen werden.

Die Schrift "A decentralized protection scheme for converters utilizing a DC-link inductor" von P. Tenca et al, Industrial Electronics Society, 2005. 31st Annual Conference of IEEE, 6. November 2005, Seiten 854-859, beschreibt ein vollständig passives Schutzsystem für Stromrichter, die Induktivitäten im Gleichspannungskreis nutzen. Dabei sind die Gleichspannungsanschlüsse der Stromrichter mit einer Diode oder einem Thyristor versehen.

Aus der Schrift "Fault analysis of HVDC systems with partial underground cabling" von P. Tünnerhoff et al, 13th IET International conference on AC and DC power transmission (ACDC 2017), 1. Januar 2017, XP055626906, ISBN: 978-1-78561-421-7 ist eine Hochspannungsgleichstrom-Übertragungsstrecke bekannt, die Kabelabschnitte und Freileitungsabschnitte aufweist.

Beim Betrieb eines Multilevelstromrichters kann es (beispielsweise aufgrund eines Fehlers oder eines singulären Ereignisses an einer mit dem Multilevelstromrichter verbundenen Gleichstromübertragungsstrecke) zu temporären Schwingungen/Oszillationen der Gleichspannung kommen. Aufgrund dieser Spannungsschwingungen kann es passieren, dass an den Gleichspannungsanschlüssen des Multilevelstromrichters hohe negative Spannungen auftreten. Solche hohen negativen Spannungen können insbesondere dann auftreten, wenn die Gleichstromübertragungsstrecke verschiedene Leiterarten aufweist, beispielsweise wenn die Gleichstromübertragungsstrecke teilweise aus einem Kabel und teilweise aus einer Freileitung besteht. Durch Reflektionen zwischen den verschiedenen Leiterarten können dann besonders hohe negative Spannungen auftreten. Unter "negativer Spannung" wird hier eine Spannung verstanden, deren Polarität entgegengesetzt ist zu der Polarität der im Normalbetrieb an dem ersten Gleichspannungsanschluss und dem zweiten Gleichspannungsanschluss des Multilevelstromrichters anliegenden Spannung ("positiver Spannung").

Zur Beherrschung solcher unerwünschter negativen Spannungen ist es denkbar, die Anzahl der Module des modularen Multilevelstromrichters zu vergrößern, damit dieser die auftretenden Spannungen aufnehmen kann, ohne die einzelnen Module zu überlasten. Eine derartige Erhöhung der Anzahl der Module ist allerdings aufwendig und kostenintensiv.

Der Erfindung liegt die Aufgabe zugrunde, eine Anordnung und ein Verfahren anzugeben, mit denen die temporär auftretenden negativen Spannungen beherrscht werden können, ohne die Anzahl der Module des Multilevelstromrichters vergrößern zu müssen.

Diese Aufgabe wird erfindungsgemäß gelöst durch eine Anordnung und ein Verfahren nach den unabhängigen Patentansprüchen. Vorteilhafte Ausführungsformen der Anordnung und des Verfahrens sind in den abhängigen Patentansprüchen angegeben.

Offenbart wird eine Anordnung mit einem Multilevelstromrichter, der mindestens ein Phasenmodul aufweist, wobei das Phasenmodul einen Wechselspannungsanschluss, einen ersten Gleichspannungsanschluss und einen zweiten Gleichspannungsanschluss aufweist, und mit einer Spannungsbegrenzungseinrichtung, die mit dem ersten Gleichspannungsanschluss und dem zweiten Gleichspannungsanschluss elektrisch verbunden ist und die in Abhängigkeit von der Polarität einer zwischen dem ersten Gleichspannungsanschluss und dem zweiten Gleichspannungsanschluss auftretenden Spannung diese Spannung begrenzt. Die Spannungsbegrenzungseinrichtung führt also eine polaritätsabhängige Spannungsbegrenzung durch. Dabei ist vorteilhaft, dass die Spannungsbegrenzungseinrichtung die Spannung in Abhängigkeit von der Polarität der zwischen dem ersten Gleichspannungsanschluss und dem zweiten Gleichspannungsanschluss auftretenden Spannung begrenzt. Mit dieser Spannungsbegrenzungseinrichtung kann also vorteilhafterweise nur die unerwünschte negative Spannung begrenzt werden, die im Normalbetrieb auftretende positive Spannung zwischen dem ersten und zweiten Gleichspannungsanschluss wird jedoch nicht begrenzt. Die Spannungsbegrenzungseinrichtung kann zwischen den ersten Gleichspannungsanschluss und den zweiten Gleichspannungsanschluss geschaltet sein.

Die Spannungsbegrenzungseinrichtung ist so ausgestaltet, dass diese nur eine zwischen dem ersten Gleichspannungsanschluss und dem zweiten Gleichspannungsanschluss auftretende Spannung einer Polarität begrenzt, und insbesondere eine zwischen dem ersten Gleichspannungsanschluss und dem zweiten Gleichspannungsanschluss auftretende Spannung der entgegengesetzten Polarität im Wesentlichen unverändert lässt.

Die Spannungsbegrenzungseinrichtung begrenzt dann also ausschließlich zwischen dem ersten Gleichspannungsanschluss und dem zweiten Gleichspannungsanschluss auftretende Spannungen einer Polarität, und lässt insbesondere zwischen dem ersten Gleichspannungsanschluss und dem zweiten Gleichspannungsanschluss auftretende Spannungen der entgegengesetzten Polarität im Wesentlichen unverändert. Die "Spannung einer Polarität" ist also die unerwünschte negative Spannung; die "Spannung entgegengesetzter Polarität" ist die im Normalbetrieb des Stromrichters auftretende (erwünschte) positive Spannung.

Die Spannungsbegrenzungseinrichtung kann so ausgestaltet sein, dass nur bei Auftreten der Spannung der einen Polarität zwischen dem ersten Gleichspannungsanschluss und dem zweiten Gleichspannungsanschluss ein Strom durch die Spannungsbegrenzungseinrichtung fließt (und dadurch die Spannung der einen Polarität begrenzt).

Die Spannungsbegrenzungseinrichtung kann also so ausgestaltet sein, dass nur dann ein Strom durch die Spannungsbegrenzungseinrichtung fließt (und dadurch die Spannung der einen Polarität begrenzt), wenn die Spannung der einen Polarität zwischen dem ersten Gleichspannungsanschluss und dem zweiten Gleichspannungsanschluss auftritt. Durch den durch die Spannungsbegrenzungseinrichtung fließenden Strom wird die Spannung der einen Polarität belastet oder (ganz oder teilweise) kurzgeschlossen und dadurch begrenzt.

Die Anordnung ist so ausgestaltet, dass die Spannungsbegrenzungseinrichtung mindestens ein Halbleiterventil, insbesondere eine Reihenschaltung von Halbleiterventilen, oder eine steuerbare (insbesondere eine einschaltbare) Funkenstrecke aufweist. Durch das Halbleiterventil wird die Abhängigkeit von der Polarität der Spannung realisiert. Dabei kann das Halbleiterventil ein ungesteuertes Halbleiterventil (zum Beispiel eine Diode) oder ein einschaltbares Halbleiterventil (zum Beispiel ein Thyristor oder ein Transistor) sein. Alternativ kann auch die steuerbare Funkenstrecke verwendet werden. Diese Funkenstrecke wird dann eingeschaltet, wenn die (unerwünschte) Spannung der einen Polarität auftritt, also wenn die unerwünschte negative Spannung auftritt.

Die Anordnung kann so ausgestaltet sein, dass die Reihenschaltung mindestens 50 Halbleiterventile aufweist. Mittels dieser vergleichsweise großen Anzahl an Halbleiterventilen lässt sich vorteilhafterweise eine hohe Sperrspannung realisieren, damit die (erwünschte) Spannung der entgegengesetzten Polarität im Wesentlichen unverändert bleibt.

Die Anordnung kann so ausgestaltet sein, dass das Halbleiterventil eine Diode, ein Thyristor oder ein Transistor ist. Insbesondere kann die Diode eine Leistungsdiode sein (zum Beispiel eine als Scheibenzelle ausgestaltete Diode); der Thyristor kann ein Leistungsthyristor sein (zum Beispiel ein als Scheibenzelle ausgestalteter Thyristor). Das Halbleiterventil kann beispielsweise als ein integrated gate-commutated thyristor (IGCT), ein gate turn-off thyristor (GTO-Thyristor), ein insulated-gate bipolar transistor (IGBT) oder als ein metaloxide-semiconductor field-effect transistor (MOSFET) ausgestaltet sein.

Die Anordnung ist so ausgestaltet, dass in Reihe zu dem mindestens einen Halbleiterventil oder in Reihe zu der Funkenstrecke ein elektrischer Widerstand geschaltet ist. Durch den elektrischen Widerstand kann vorteilhafterweise der durch die Spannungsbegrenzungseinrichtung fließende Strom begrenzt werden. Außerdem kann an dem elektrischen Widerstand (im Fehlerfall) die in der Gleichstromübertragungsstrecke gespeicherte elektrische Energie in Wärme umgesetzt werden.

Die Anordnung ist dabei so ausgestaltet, dass der elektrische Widerstand ein Varistor (spannungsabhängiger Widerstand) ist, insbesondere ein Metalloxid-Varistor. Als Varistor kann beispielsweise ein Überspannungsableiter verwendet werden. Mittels eines solchen Überspannungsableiters kann durch entsprechende Wahl der Ansprechspannung/Schwellenspannung erreicht werden, dass die Spannungsbegrenzung erst ab einer bestimmten Größe der (unerwünschten) Spannung der einen Polarität einsetzt.

Die Anordnung ist so ausgestaltet, dass der erste Gleichspannungsanschluss und der zweite Gleichspannungsanschluss mit einer Gleichstromübertragungsstrecke, insbesondere einer Hochspannungs-Gleichstromübertragungsstrecke, verbunden ist, wobei die Gleichstromübertragungsstrecke zwei verschiedene Leiterarten aufweist, welche sich bezüglich ihrer längenbezogenen elektrischen Kapazität unterscheiden ("gemischte Gleichstromübertragungsstrecke"). Bei derartigen Gleichstromübertragungsstrecken kann die Spannungsbegrenzungseinrichtung mit besonderem Vorteil eingesetzt werden, weil bei zwei verschiedenen Leiterarten besonders hohe unerwünschte negative Spannungen an den Gleichspannungsanschlüssen des Multilevelstromrichters auftreten können.

Die Anordnung ist so ausgestaltet, dass die verschiedenen Leiterarten eine Freileitung, ein Kabel und/oder eine gasisolierte Leitung sind. Das Kabel kann insbesondere ein Hochspannungskabel sein. Dabei hat beispielsweise ein Kabel eine höhere längenbezogene elektrische Kapazität als eine Freileitung. Als ein weiteres Beispiel hat eine gasisolierte Leitung eine höhere längenbezogene elektrische Kapazität als eine Freileitung.

Die Anordnung kann auch so ausgestaltet sein, dass das Kabel ein kunststoffisoliertes Kabel, ein ölisoliertes Kabel oder ein masseisoliertes Kabel (mass-impregnated cable) ist. Insbesondere kann die Gleichstromübertragungsstrecke eine Freileitung und ein Kabel (insbesondere ein kunststoffisoliertes Kabel, ein ölisoliertes Kabel oder ein masseisoliertes Kabel) aufweisen.

Die Anordnung kann so ausgestaltet sein, dass das Phasenmodul eine Mehrzahl von Modulen aufweist, die elektrisch in Reihe geschaltet sind.

Die Anordnung kann so ausgestaltet sein, dass ein erstes Modul (der Mehrzahl von Modulen) einen ersten elektrischen Modulanschluss, einen zweiten elektrischen Modulanschluss, ein erstes elektronisches Schaltelement, ein zweites elektronisches Schaltelement und einen elektrischen Energiespeicher aufweist, wobei das Modul so ausgestaltet ist, dass in Abhängigkeit von einer Ansteuerung des ersten elektronischen Schaltelements und/oder des zweiten elektronischen Schaltelements an dem ersten elektrischen Modulanschluss und dem zweiten elektrischen Modulanschluss eine Spannung ausschließlich einer Polarität oder die Spannung Null (Nullspannung) ausgegeben werden kann, und/oder - ein zweites Modul (der Mehrzahl von Modulen) einen ersten elektrischen Modulanschluss, einen zweiten elektrischen Modulanschluss, ein erstes elektronisches Schaltelement, ein zweites elektronisches Schaltelement, ein drittes elektronisches Schaltelement, ein viertes elektronisches Schaltelement und einen elektrischen Energiespeicher aufweist, wobei das Modul so ausgestaltet ist, dass in Abhängigkeit von einer Ansteuerung des ersten elektronischen Schaltelements, des zweiten elektronischen Schaltelements, des dritten elektronischen Schaltelements und/oder des vierten elektronischen Schaltelements an dem ersten elektrischen Modulanschluss und dem zweiten elektrischen Modulanschluss eine Spannung einer Polarität, eine Spannung entgegengesetzter Polarität oder die Spannung Null (Nullspannung) ausgegeben werden kann.

Dabei sind die Begriffe "erstes Modul" und "zweites Modul" lediglich als Bezeichnung für zwei verschiedene Modultypen zu verstehen, nicht aber als Nummerierung der Module. Ein Modul des Typs "erstes Modul" kann also nur eine Spannung einer Polarität an seinen Modulanschlüssen bereitstellen, wohingegen ein Modul des Typs "zweites Modul" Spannungen beider Polaritäten an seinen Modulanschlüssen bereitstellen kann.

Die Anordnung kann auch so ausgestaltet sein, dass das erste Modul ein Halbbrückenmodul ist, bei dem das erste elektronische Schaltelement und das zweite elektronische Schaltelement in einer Halbbrückenschaltung angeordnet sind.

Die Anordnung kann auch so ausgestaltet sein, dass das zweite Modul ein Modul ist, bei dem die elektronischen Schaltelemente in mehreren Halbbrückenschaltungen angeordnet sind.

Das zweite Modul weist also mehrere Halbbrückenschaltungen auf, die jeweils zwei elektronische Schaltelemente aufweisen bzw. jeweils aus zwei elektronischen Schaltelementen gebildet sind.

Die Anordnung kann auch so ausgestaltet sein, dass das zweite Modul ein Vollbrückenmodul ist, bei dem das erste elektronische Schaltelement, das zweite elektronische Schaltelement, das dritte elektronische Schaltelement und das vierte elektronische Schaltelement in einer Vollbrückenschaltung angeordnet sind.

Die Anordnung kann so ausgestaltet sein, dass das zweite Modul ein Modul ist, das zusätzlich zu dem elektrischen Energiespeicher einen weiteren elektrischen Energiespeicher aufweist. Mit einem derartigen Modul lassen sich unterschiedlich große Spannungen an den Modulanschlüssen ausgeben, indem beispielsweise die Spannungen des elektrischen Energiespeichers und des weiteren elektrischen Energiespeichers durch Reihenschaltung addiert oder subtrahiert werden.

Die Anordnung kann auch so ausgestaltet sein, dass das Phasenmodul erste Module und zweite Module aufweist, die elektrisch in Reihe geschaltet sind (insbesondere Halbbrückenmodule und Vollbrückenmodule).

Die Anordnung kann so ausgestaltet sein, dass der Multilevelstromrichter 2 oder 3 Phasenmodule aufweist, die an ihrem ersten Gleichspannungsanschluss und zweiten Gleichspannungsanschluss parallelgeschaltet sind. Damit kann der Multilevelstromrichter auch in zweiphasigen oder dreiphasigen Stromnetzen eingesetzt werden.

Die Anordnung kann so ausgestaltet sein, dass die Spannungsbegrenzungseinrichtung eine erste Reihenschaltung aus dem mindestens einen Halbleiterventil (bzw. den Halbleiterventilen) und dem elektrischen Widerstand und eine zweite Reihenschaltung aus mindestens einem weiteren Halbleiterventil (bzw. weiteren Halbleiterventilen) und einem weiteren elektrischen Widerstand aufweist. Der Verbindungspunkt zwischen der ersten Reihenschaltung und der zweiten Reihenschaltung ist geerdet. Der dem Verbindungspunkt gegenüberliegenden Anschluss der ersten Reihenschaltung ist mit einem der Gleichspannungsanschlüsse elektrisch verbunden; der dem Verbindungspunkt gegenüberliegenden Anschluss der zweiten Reihenschaltung ist mit dem anderen der Gleichspannungsanschlüsse elektrisch verbunden. Die Halbleiterventile und die Widerstände können so ausgestaltet sein wie oben und in den Ausführungsbeispielen angegeben. Diese Anordnung kann insbesondere bei einer Symmetrischer-Monopol-Konfiguration einer Hochspannungs-Gleichstrom-Übertragungsanlage eingesetzt werden.

Offenbart wird weiterhin eine Hochspannungs-Gleichstrom-Übertragungsanlage mit einer Anordnung nach einer der vorstehend beschriebenen Varianten.

Offenbart wird weiterhin ein Verfahren zum polaritätsabhängigen Begrenzen einer zwischen einem ersten Gleichspannungsanschluss und einem zweiten Gleichspannungsanschluss eines Multilevelstromrichters auftretenden Spannung bei dem - mittels einer Spannungsbegrenzungseinrichtung, die mit dem ersten Gleichspannungsanschluss und dem zweiten Gleichspannungsanschluss elektrisch verbunden ist, nur eine zwischen dem ersten Gleichspannungsanschluss und dem zweiten Gleichspannungsanschluss auftretende Spannung einer Polarität begrenzt wird und insbesondere eine zwischen dem ersten Gleichspannungsanschluss und dem zweiten Gleichspannungsanschluss auftretende Spannung der entgegengesetzten Polarität im Wesentlichen unverändert gelassen wird.

Das Verfahren kann so ausgestaltet sein, dass - nur bei Auftreten der Spannung der einen Polarität zwischen dem ersten Gleichspannungsanschluss und dem zweiten Gleichspannungsanschluss ein Strom durch die Spannungsbegrenzungseinrichtung fließt und dadurch die Spannung der einen Polarität begrenzt wird.

Die beschriebene Anordnung und das beschriebene Verfahren weisen gleiche bzw. gleichartige Vorteile auf.

Im Folgenden wird die Erfindung anhand von Ausführungsbeispielen näher erläutert. Gleiche Bezugszeichen verweisen dabei auf gleiche oder gleichwirkende Elemente. Dazu ist in
- Figur 1: ein Ausführungsbeispiel eines Multilevelstromrichters mit einer Spannungsbegrenzungseinrichtung, in den
- Figuren 2 bis 4: weitere Ausführungsbeispiele eines Multilevelstromrichters mit einer Spannungsbegrenzungseinrichtung, in
- Figur 5: ein Ausführungsbeispiel einer Hochspannungs-Gleichstrom-Übertragungsanlage mit einem derartigen Multilevelstromrichter, in
- Figur 6: ein Ausführungsbeispiel eines Moduls des Multilevelstromrichters in Form eines Halbbrückenmoduls, in
- Figur 7: ein Ausführungsbeispiel eines Moduls des Multilevelstromrichters in Form eines Vollbrückenmoduls, in den
- Figuren 8 bis 10: weitere Ausführungsbeispiele von Modulen des Multilevelstromrichters und in
- Figur 11: ein weiteres Ausführungsbeispiel eines Multilevelstromrichters mit einer Spannungsbegrenzungseinrichtung
dargestellt.

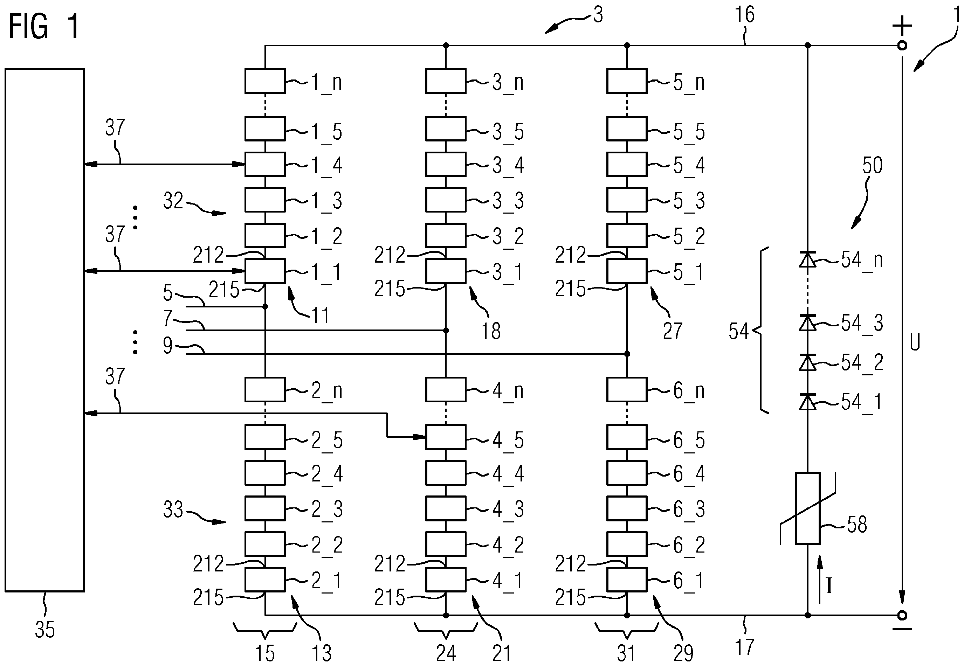

In Figur 1 ist ein Ausführungsbeispiel einer Anordnung 1 mit einem Stromrichter 3 in Form eines modularen Multilevelstromrichters 3 dargestellt. Dieser Multilevelstromrichter 3 weist einen ersten Wechselspannungsanschluss 5, einen zweiten Wechselspannungsanschluss 7 und einen dritten Wechselspannungsanschluss 9 auf. Der erste Wechselspannungsanschluss 5 ist elektrisch mit einem ersten Phasenmodulzweig 11 und einem zweiten Phasenmodulzweig 13 verbunden. Der erste Phasenmodulzweig 11 und der zweite Phasenmodulzweig 13 bilden ein erstes Phasenmodul 15 des Stromrichters 3. Das dem ersten Wechselspannungsanschluss 5 abgewandte Ende des ersten Phasenmodulzweigs 11 ist mit einem ersten Gleichspannungsanschluss 16 elektrisch verbunden; das dem ersten Wechselspannungsanschluss 5 abgewandte Ende des zweiten Phasenmodulzweigs 13 ist mit einem zweiten Gleichspannungsanschluss 17 elektrisch verbunden. Der erste Gleichspannungsanschluss 16 ist ein positiver Gleichspannungsanschluss; der zweite Gleichspannungsanschluss 17 ist ein negativer Gleichspannungsanschluss.

Der zweite Wechselspannungsanschluss 7 ist mit einem Ende eines dritten Phasenmodulzweigs 18 und mit einem Ende eines vierten Phasenmodulzweigs 21 elektrisch verbunden. Der dritte Phasenmodulzweig 18 und der vierte Phasenmodulzweig 21 bilden ein zweites Phasenmodul 24. Der dritte Wechselspannungsanschluss 9 ist mit einem Ende eines fünften Phasenmodulzweigs 27 und mit einem Ende eines sechsten Phasenmodulzweigs 29 elektrisch verbunden. Der fünfte Phasenmodulzweig 27 und der sechste Phasenmodulzweig 29 bilden ein drittes Phasenmodul 31.

Das dem zweiten Wechselspannungsanschluss 7 abgewandte Ende des dritten Phasenmodulzweigs 18 und das dem dritten Wechselspannungsanschluss 9 abgewandte Ende des fünften Phasenmodulzweigs 27 sind mit dem ersten Gleichspannungsanschluss 16 elektrisch verbunden. Das dem zweiten Wechselspannungsanschluss 7 abgewandte Ende des vierten Phasenmodulzweigs 21 und das dem dritten Wechselspannungsanschluss 9 abgewandte Ende des sechsten Phasenmodulzweigs 29 sind mit dem zweiten Gleichspannungsanschluss 17 elektrisch verbunden. Der erste Phasenmodulzweig 11, der dritte Phasenmodulzweig 18 und der fünfte Phasenmodulzweig 27 bilden ein positivseitiges Stromrichterteil 32; der zweite Phasenmodulzweig 13, der vierte Phasenmodulzweig 21 und der sechste Phasenmodulzweig 29 bilden ein negativseitiges Stromrichterteil 33.

Jeder Phasenmodulzweig weist eine Mehrzahl von Modulen (1_1, 1_2, 1_3, 1_4 ... 1_n; 2_1 ... 2_n; usw.) auf, welche (mittels ihrer Modulanschlüsse) elektrisch in Reihe geschaltet sind. Solche Module werden auch als Submodule bezeichnet. Im Ausführungsbeispiel der Figur 1 weist jeder Phasenmodulzweig n Module auf. Die Anzahl der mittels ihrer Modulanschlüsse elektrisch in Reihe geschalteten Module kann sehr verschieden sein, mindestens sind drei Module in Reihe geschaltet, es können aber auch beispielsweise 50, 100 oder mehr Module elektrisch in Reihe geschaltet sein. Im Ausführungsbeispiel ist n = 36: der erste Phasenmodulzweig 11 weist also 36 Module 1_1, 1_2, 1_3, ... 1_36 auf. Die anderen Phasenmodulzweige 13, 18, 21, 27 und 29 sind gleichartig aufgebaut.

Im linken Bereich der Figur 1 ist schematisch eine Steuereinrichtung 35 für die Module 1_1 bis 6_n dargestellt. Von dieser zentralen Steuereinrichtung 35 werden optische Nachrichten bzw. optische Signale über eine optische Kommunikationsverbindung 37 (zum Beispiel über einen Lichtwellenleiter) zu den einzelnen Modulen übertragen. Die Nachrichtenübertragung zwischen der Steuereinrichtung und einem Modul ist jeweils symbolhaft durch eine Linie 37 dargestellt; die Richtung der Nachrichtenübertragung ist durch die Pfeilspitzen an den Linien 37 symbolisiert. Dies ist am Beispiel der Module 1_1, 1_4 und 4_5 dargestellt; zu den anderen Modulen werden auf die gleiche Art und Weise Nachrichten gesendet beziehungsweise von diesen Modulen Nachrichten empfangen. Beispielsweise sendet die Steuereinrichtung 35 an die einzelnen Module jeweils einen Sollwert für den Schaltzustand der elektronischen Schaltelemente.

Eine Spannungsbegrenzungseinrichtung 50 ist elektrisch mit dem ersten Gleichspannungsanschluss 16 und dem zweiten Gleichspannungsanschluss 17 verbunden. Die Spannungsbegrenzungseinrichtung 50 ist im Ausführungsbeispiel zwischen den ersten Gleichspannungsanschluss 16 und den zweiten Gleichspannungsanschluss 17 geschaltet. Diese Spannungsbegrenzungseinrichtung 50 verbindet den ersten Gleichspannungsanschluss 16 und den zweiten Gleichspannungsanschluss 17. Die Spannungsbegrenzungseinrichtung 50 weist Halbleiterventile 54_1, 54_2, 54_3 usw. bis 54_n auf, die elektrisch in Reihe geschaltet sind. Prinzipiell würde die Spannungsbegrenzungseinrichtung 50 auch bereits mit einem einzigen Halbleiterventil 54_1 funktionieren. Die Halbleiterventile 54_1, 54_2, 54_3 ... 54_n bilden ein Gesamt-Halbleiterventil 54 mit einer höheren Sperrspannung als die einzelnen Halbleiterventile.

Im Ausführungsbeispiel beträgt n = 50, es sind also 50 Halbleiterventile elektrisch in Reihe geschaltet. In anderen Ausführungsbeispielen können aber durchaus größere Anzahlen von Halbleiterventilen elektrisch in Reihe geschaltet sein, beispielsweise 100 oder 200. Falls nur eine geringe Sperrspannung benötigt ist, kann auch eine geringere Anzahl an Halbleiterventilen ausreichend sein.

Die Halbleiterventile 54_1, 54_2, 54_3 ... 54_n sind im Ausführungsbeispiel als Dioden 54_1, 54_2, 54_3 ... 54_n ausgestaltet. Konkret sind im Ausführungsbeispiel der Figur 1 n Dioden elektrisch in Reihe geschaltet und bilden das Gesamt-Halbleiterventil 54.

Die Halbleiterventile 54_1, 54_2, 54_3 ... 54_n bilden eine elektrische Reihenschaltung mit einem elektrischen Widerstand 58. Bei dem Widerstand 58 kann es sich um einen linearen (ohmschen) Widerstand handeln. Der Widerstand 58 kann aber auch ein Varistor (spannungsabhängiger Widerstand) sein, insbesondere ein Metalloxid-Varistor. Der Widerstand 58 kann insbesondere ein Überspannungsableiter sein. Durch den Überspannungsableiter 58 wird erreicht, dass die Spannungsbegrenzungseinrichtung 50 erst ab einer bestimmten Größe der unerwünschten negativen Spannung wirksam wird. Außerdem kann in dem Widerstand 58 bzw. dem Varistor 58 überschüssige elektrische Energie in Wärme umgesetzt werden. Bei normalen Betriebsverhältnissen/Normalbetrieb liegt zwischen dem ersten Gleichspannungsanschluss 16 und dem zweiten Gleichspannungsanschluss 17 eine positive Spannung U an (das heißt, das elektrische Potenzial am ersten Gleichspannungsanschluss 16 ist größer als das elektrische Potenzial am zweiten Gleichspannungsanschluss 17). Dann fließt aufgrund der Ventilwirkung der Halbleiterventile 54_1 ... 54_n kein elektrischer Strom durch die Spannungsbegrenzungseinrichtung. Dadurch wird bei Normalbetrieb die an den Gleichspannungsanschlüssen 16, 17 anliegende (positive) Gleichspannung U nicht verändert. Wenn jedoch beispielsweise in einer an die Gleichspannungsanschlüsse 16, 17 angeschlossenen Gleichstromübertragungsstrecke ein singuläres Ereignis oder ein Fehler auftritt, dann kann es dazu kommen, dass zwischen dem ersten Gleichspannungsanschluss 16 und dem zweiten Gleichspannungsanschluss 17 eine Spannung U umgekehrter Polarität auftritt (negative Spannung). Derartige negative Spannungen können beispielsweise aufgrund von unerwünschten Schwingungen in der Gleichstromübertragungsstrecke auftreten. In diesem Fall ist das elektrische Potenzial am ersten Gleichspannungsanschluss 16 zumindest zeitweise kleiner als das elektrische Potenzial am zweiten Gleichspannungsanschluss 17. Dann fließt ein Strom I von dem zweiten Gleichspannungsanschluss 17 durch den Widerstand 58 und die Halbleiterventile 54_1 ... 54_n zu dem ersten Gleichspannungsanschluss 16. Dadurch wird die unerwünschte negative Spannung U zwischen den beiden Gleichspannungsanschlüssen 16 und 17 mit einer Last versehen und dadurch begrenzt/gedämpft. Im Extremfall wird die unerwünschte negative Spannung U kurzgeschlossen. Wenn der Widerstand 58 ein Überspannungsableiter ist, dann fließt der Strom I erst dann durch die Spannungsbegrenzungseinrichtung 50, wenn die negative Spannung so groß ist, dass die Ansprechspannung des Überspannungsableiters überschritten wird.

Abhängig von der maximalen Stromänderungsgeschwindigkeit des durch die Spannungsbegrenzungseinrichtung 50 fließenden Stroms I kann es gegebenenfalls vorteilhaft sein, schnelle Dioden (z.B. IGCT-Dioden) einzusetzen. Die Halbleiterventile können insbesondere anhand ihres i²t-Wertes ausgewählt werden.

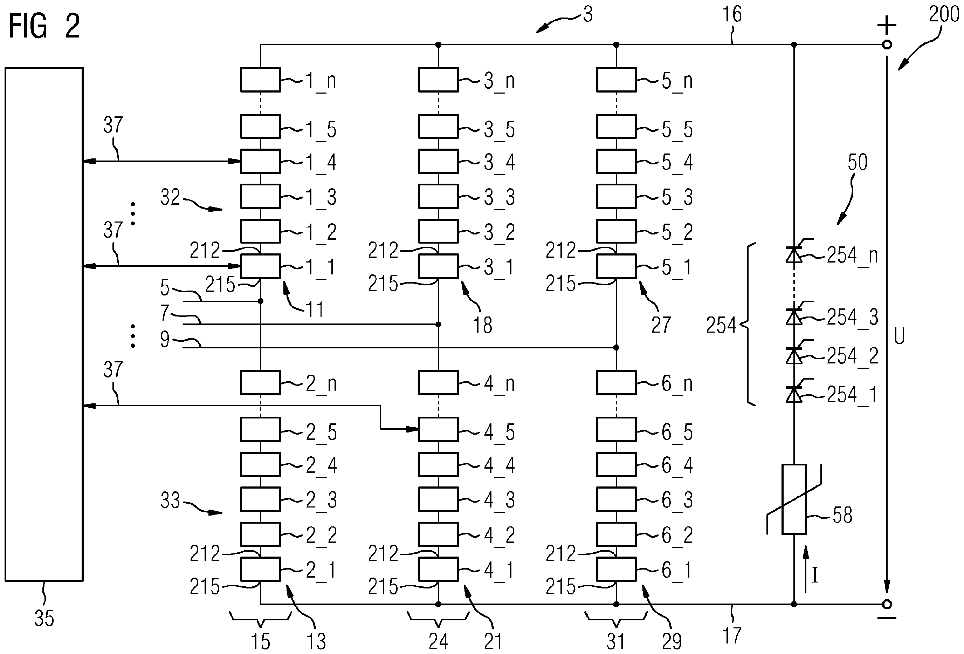

In Figur 2 ist ein weiteres Ausführungsbeispiel einer Anordnung 200 dargestellt. Diese Anordnung 200 unterscheidet sich von der Anordnung 1 der Figur 1 lediglich dadurch, dass die Halbleiterventile als Thyristoren 254_1 ... 254_n ausgestaltet sind. Bei Auftreten einer unerwünschten negativen Spannung werden diese Thyristoren 254_1 ... 254_n mittels einer (nicht dargestellten) Ansteuerschaltung im Wesentlichen gleichzeitig angesteuert, so dass diese dann einen leitenden Zustand einnehmen und einen Stromfluss I von dem zweiten Gleichspannungsanschluss 17 zu dem ersten Gleichspannungsanschluss 16 ermöglichen. Die Thyristoren können dabei eine parallelgeschaltete Schutzbeschaltung mit einem RC-Glied aufweisen. Auch die in Figur 1 dargestellten Dioden können eine derartige Schutzbeschaltung aufweisen. Anstelle der Thyristoren können auch andere einschaltbare Halbleiterventile verwendet werden, beispielsweise Transistoren.

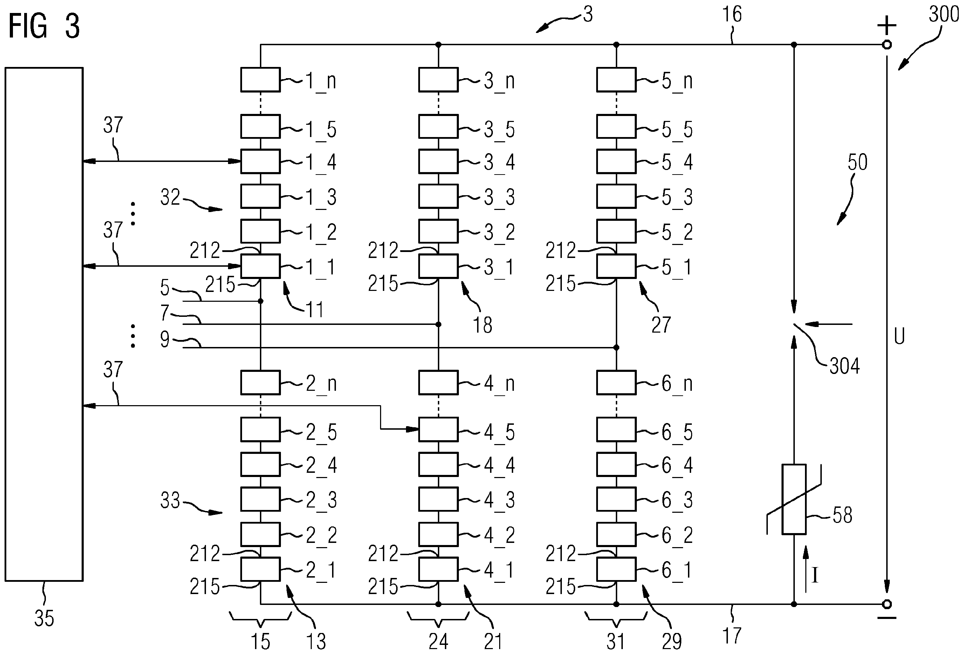

In Figur 3 ist ein weiteres Ausführungsbeispiel einer Anordnung 300 dargestellt. Diese Anordnung 300 unterscheidet sich von dem Ausführungsbeispiel der Figur 1 lediglich dadurch, dass anstelle der Halbleiterventile 54 eine steuerbare (einschaltbare) Funkenstrecke 304 vorgesehen ist. Beim Auftreten der unerwünschten negativen Spannung wird die Funkenstrecke 304 gezündet (das heißt eingeschaltet) und dadurch der Stromfluss I vom zweiten Gleichspannungsanschluss 17 durch die Spannungsbegrenzungseinrichtung 50 zum ersten Gleichspannungsanschluss 16 ermöglicht. Im ungezündeten (ausgeschalteten) Zustand blockiert die Funkenstrecke 304 den Stromfluss.

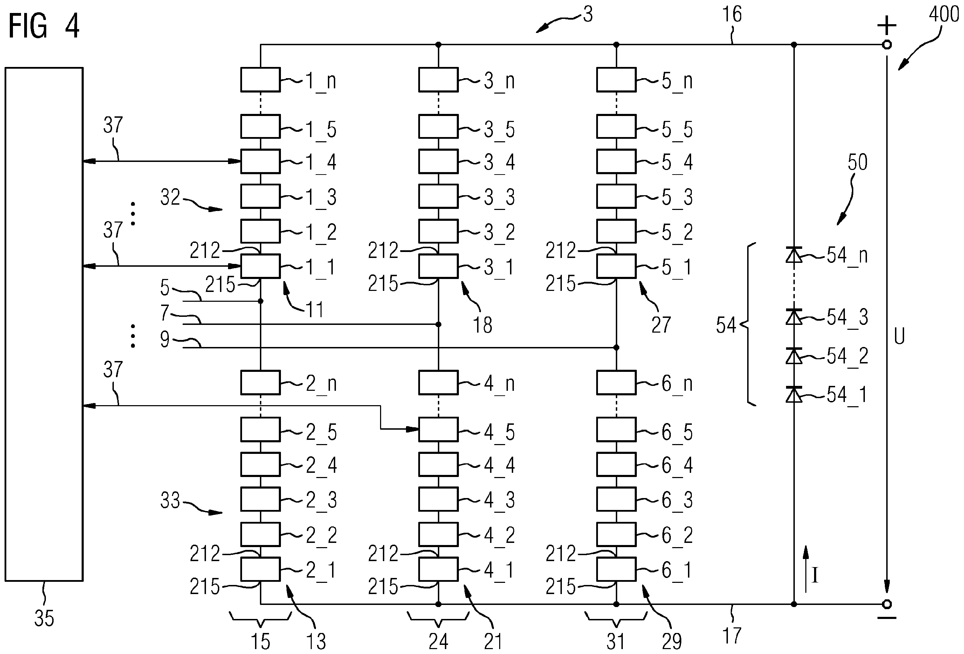

In Figur 4 ist ein weiteres Ausführungsbeispiel einer Anordnung 400 dargestellt. Diese Anordnung 400 unterscheidet sich vom Ausführungsbeispiel der Figur 1 lediglich dadurch, dass der Widerstand 58 entfällt. Die Spannungsbegrenzungseinrichtung 50 weist also lediglich die Halbleiterventile 54_1 ... 54_n auf. In diesem Fall wird die unerwünschte negative Spannung auf die Summe der Durchlassspannungen der Halbleiterventile 54_1 ... 54_n begrenzt. Der durch die Spannungsbegrenzungseinrichtung 50 fließende Strom I wird nicht durch den Widerstand 58 begrenzt, so dass die Halbleiterventile 54_1 ... 54_n ausreichend robust dimensioniert sein müssen. Auch bei den Ausführungsbeispielen der Figuren 2 und 3 kann der Widerstand bzw. Überspannungsableiter 58 weggelassen werden.

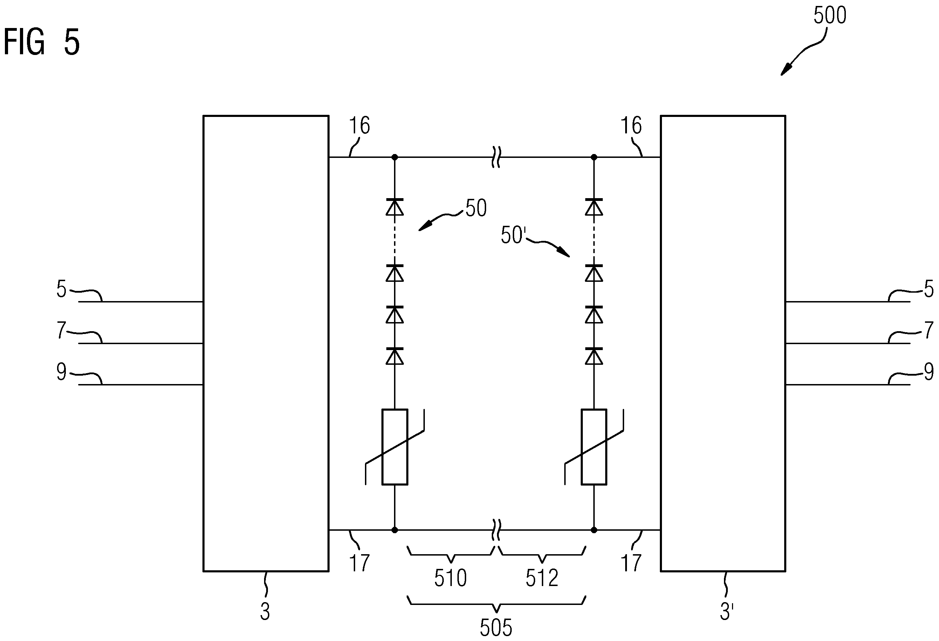

In Figur 5 ist ein Ausführungsbeispiel einer Hochspannungs-Gleichstrom-Übertragungsanlage 500 dargestellt. Diese Hochspannungs-Gleichstrom-Übertragungsanlage 500 weist einen Multilevelstromrichter 3 und eine Spannungsbegrenzungseinrichtung 50 gemäß Figur 1 sowie eine Gleichstromübertragungsstrecke 505 auf. Die Gleichstromübertragungsstrecke 505 weist im Ausführungsbeispiel der Figur 5 zwei verschiedene Leiterarten auf: ein erster Teil 510 der Gleichstromübertragungsstrecke 505 ist als Freileitung 510 (erste Leiterart 510) ausgestaltet; ein zweiter Teil der Gleichstromübertragungsstrecke 505 ist als ein Kabel 512 ausgestaltet (zweite Leiterart 512), insbesondere als ein kunststoffisoliertes Kabel 512. Das Kabel 512 kann auch ein anderes Kabel sein, insbesondere ein ölisoliertes Kabel oder ein masseisoliertes Kabel. An dem dem Multilevelstromrichter 3 abgewandten Ende der Gleichstromübertragungsstrecke 505 kann ein weiterer Multilevelstromrichter 3' angeordnet sein. Der weitere Multilevelstromrichter 3` kann insbesondere auch mit einer Spannungsbegrenzungseinrichtung 50' verbunden sein.

Die beiden Stromrichter 3 und 3' sind gleichspannungsseitig über die Hochspannungs-Gleichstromübertragungsstrecke 505 elektrisch miteinander verbunden. Mittels einer derartigen Hochspannungs-Gleichstrom-Übertragungsanlage 500 kann elektrische Energie über weite Entfernungen übertragen werden; die Hochspannungs-Gleichstromübertragungsstrecke 505 weist dann eine entsprechende Länge auf. Eine solche Hochspannungs-Gleichstrom-Übertragungsanlage kann auch eine Multi-Terminal-Hochspannungs-Gleichstrom-Übertragungsanlage sein.

Bei dem modularen Multilevelstromrichter 3 oder dem weiteren modularen Multilevelstromrichter 3` kann beispielsweise der erste Gleichspannungsanschluss 16 oder der zweite Gleichspannungsanschluss 17 geerdet sein (insbesondere bei einer Bipol-Konfiguration). Diese Erdung kann unmittelbar erfolgen ("harte Erdung") oder mittelbar beispielsweise über einen Ableiter oder eine Impedanz. Alternativ können der erste Gleichspannungsanschluss und der zweite Gleichspannungsanschluss ungeerdet sein (insbesondere bei einer Symmetrischer-Monopol-Konfiguration); die Erdung erfolgt dann auf der Wechselspannungsseite des Multilevelstromrichters (ein Sternpunkt des Wechselstromnetzes kann geerdet sein; insbesondere ein Sternpunkt eines wechselspannungsseitigen Transformators oder ein zusätzlich geschaffener hochimpedanter Sternpunkt ("künstlicher Sternpunkt").

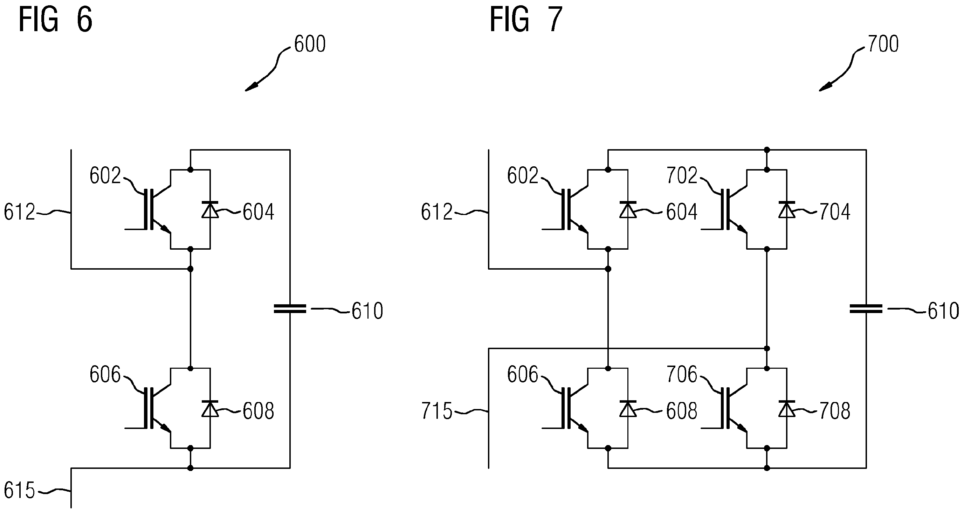

In Figur 6 ist ein Ausführungsbeispiel eines Moduls 600 des modularen Multilevelstromrichters 3 dargestellt. Bei dem Modul kann es sich beispielsweise um eines der in Figur 1 dargestellten Module 1_1 ... 6_n handeln. Es können auch mehrere oder alle Module des modularen Multilevelstromrichters 3 so ausgestaltet sein wie das dargestellte Modul 600. Beim Modul 600 handelt es sich um ein Modul des Typs "erstes Modul".

Das Modul 600 ist als ein Halbbrücken-Modul 600 ausgestaltet. Das Modul 600 weist ein erstes (abschaltbares) elektronisches Schaltelement 602 (erstes abschaltbares Halbleiterventil 602) mit einer ersten antiparallel geschalteten Diode 604 auf. Weiterhin weist das Modul 600 ein zweites (abschaltbares) elektronisches Schaltelement 606 (zweites abschaltbares Halbleiterventil 606) mit einer zweiten antiparallel geschalteten Diode 608 sowie einen elektrischen Energiespeicher 610 in Form eines Kondensators 610 auf. Das erste elektronische Schaltelement 602 und das zweite elektronische Schaltelement 606 sind jeweils als ein IGBT (insulated-gate bipolar transistor) ausgestaltet. Das erste elektronische Schaltelement 602 ist elektrisch in Reihe geschaltet mit dem zweiten elektronischen Schaltelement 606. Am Verbindungspunkt zwischen den beiden elektronischen Schaltelementen 602 und 606 ist ein erster Modulanschluss 612 angeordnet. An dem Anschluss des zweiten elektronischen Schaltelements 606, welcher dem Verbindungspunkt gegenüberliegt, ist ein zweiter Modulanschluss 615 angeordnet. Der zweite Modulanschluss 615 ist weiterhin mit einem ersten Anschluss des Energiespeichers 610 elektrisch verbunden; ein zweiter Anschluss des Energiespeichers 610 ist elektrisch verbunden mit dem Anschluss des ersten elektronischen Schaltelements 602, der dem Verbindungspunkt gegenüberliegt.

Der Energiespeicher 610 ist also elektrisch parallel geschaltet zu der Reihenschaltung aus dem ersten elektronischen Schaltelement 602 und dem zweiten elektronischen Schaltelement 606. Durch entsprechende Ansteuerung des ersten elektronischen Schaltelements 602 und des zweiten elektronischen Schaltelements 606 durch eine Steuereinrichtung des Stromrichters kann erreicht werden, dass zwischen dem ersten Modulanschluss 612 und dem zweiten Modulanschluss 615 entweder die Spannung des Energiespeichers 610 ausgegeben wird oder keine Spannung ausgegeben wird (d.h. eine Nullspannung ausgegeben wird). Durch Zusammenwirken der Module der einzelnen Phasenmodulzweige kann so die jeweils gewünschte Ausgangsspannung des Stromrichters erzeugt werden. Der Energiespeicher kann ein Kondensator sein (oder eine Zusammenschaltung aus mehreren Kondensatoren); die Spannung des Energiespeichers ist dann die Kondensatorspannung (oder die Gesamtspannung der Zusammenschaltung).

In Figur 7 ist ein weiteres Ausführungsbeispiel eines Moduls 700 des modularen Multilevelstromrichters 3 dargestellt. Bei dem Modul 700 kann es sich beispielsweise um eines der in Figur 1 dargestellten Module 1_1 ... 6_n handeln. Es können auch mehrere oder alle Module des modularen Multilevelstromrichters 3 so ausgestaltet sein wie das dargestellte Modul 700. Beim Modul 700 handelt es sich um ein Modul des Typs "zweites Modul".

Neben den bereits aus Figur 6 bekannten ersten elektronischen Schaltelement 602, zweiten elektronischen Schaltelement 606, erster Freilaufdiode 604, zweiter Freilaufdiode 608 und Energiespeicher 610 weist das in Figur 7 dargestellte Modul 700 ein drittes elektronisches Schaltelement 702 mit einer antiparallel geschalteten dritten Freilaufiode 704 sowie ein viertes elektronisches Schaltelement 706 mit einer vierten antiparallel geschalteten Freilaufdiode 708 auf. Das dritte elektronische Schaltelement 702 und das vierte elektronische Schaltelement 706 sind jeweils als ein IGBT ausgestaltet. Im Unterschied zur Schaltung der Figur 6 ist der zweite Modulanschluss 715 nicht mit dem zweiten elektronischen Schaltelement 606 elektrisch verbunden, sondern mit einem Mittelpunkt (Verbindungspunkt) einer elektrischen Reihenschaltung aus dem dritten elektronischen Schaltelement 702 und dem vierten elektronischen Schaltelement 706.

Das Modul der Figur 7 ist ein sogenanntes Vollbrücken-Modul 700. Dieses Vollbrücken-Modul 700 zeichnet sich dadurch aus, dass bei entsprechender Ansteuerung der vier elektronischen Schaltelemente zwischen dem ersten Modulanschluss 612 und dem zweiten Modulanschluss 715 wahlweise entweder die positive Spannung des Energiespeichers 610, die negative Spannung des Energiespeichers 610 oder eine Spannung des Wertes Null (Nullspannung) ausgegeben werden kann. Somit kann also mittels des Vollbrückenmoduls 700 die Polarität der Ausgangsspannung umgekehrt werden. Der Multilevelstromrichter 3 kann entweder nur Halbbrücken-Module 600, nur VollbrückenModule 700 oder auch Halbbrücken-Module 600 und VollbrückenModule 700 aufweisen.

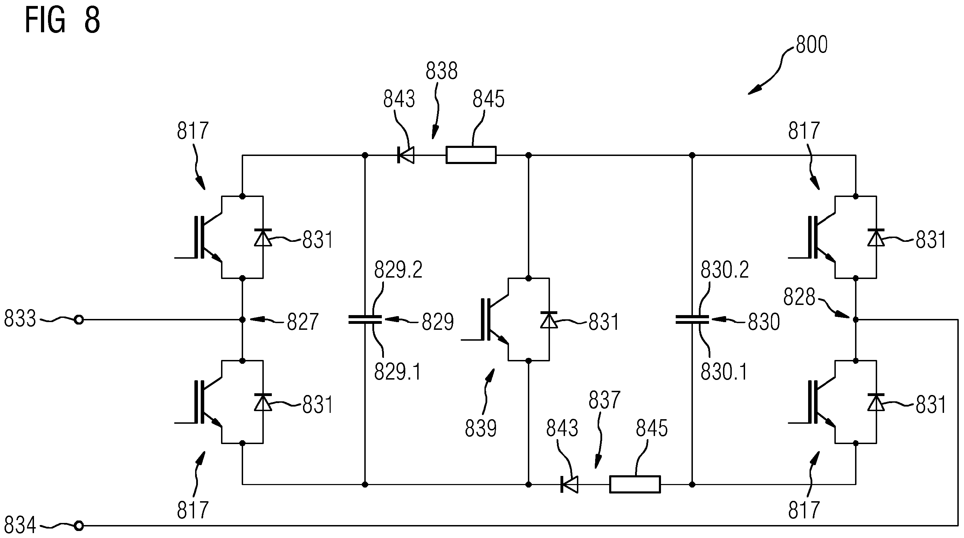

In Figur 8 ist ein weiteres Ausführungsbeispiel eines Moduls 800 des modularen Multilevelstromrichters 3 dargestellt. Beim Modul 800 handelt es sich um ein Modul des Typs "zweites Modul".

Das Modul 800 ist als ein Doppel-Halbbrückenmodul 800 ausgebildet. Dieses Modul 800 weist zwei Halbbrücken 827 und 828 auf, in deren Brückenarmen jeweils ein Halbleiterschalter 817 angeordnet ist. Jeder Halbleiterschalter 817 weist jeweils ein elektronisches Schaltelement (beispielsweise einen IGBT) und eine Freilaufdiode 831 auf. Weiterhin weist das Modul 800 zwei Kondensatoren 829 und 830, zwei Gleichrichterschaltungen 837 und 838 und einen Kopplungs-Halbleiterschalter 839 auf. Der erste Kondensator 829 ist parallel zu der ersten Halbbrücke 827 geschaltet. Der zweite Kondensator 830 ist parallel zu der zweiten Halbbrücke 828 geschaltet. Die erste Gleichrichterschaltung 837 verbindet einen ersten Anschluss 829.1 des ersten Kondensators 829 mit einem ersten Anschluss 830.1 des zweiten Kondensators 830. Die zweite Gleichrichterschaltung 838 verbindet einen zweiten Anschluss 829.2 des ersten Kondensators 829 mit einem zweiten Anschluss 830.2 des zweiten Kondensators 830. Der Kopplungs-Halbleiterschalter 839 ist zwischen den ersten Anschluss 829.1 des ersten Kondensators 829 und einen zweiten Anschluss 830.2 des zweiten Kondensators 830 geschaltet. Jede Gleichrichterschaltung 837, 838 ist als eine Reihenschaltung einer Gleichrichterdiode 843 und eines Widerstands 845 ausgebildet, wobei die Kathode der Gleichrichterdiode 843 der ersten Gleichrichterschaltung 837 mit dem ersten Anschluss 829.1 des ersten Kondensators 829 verbunden ist und die Kathode der Gleichrichterdiode 843 der zweiten Gleichrichterschaltung 838 mit dem zweiten Anschluss 829.2 des ersten Kondensators 829 verbunden ist. Das Modul 800 weist ferner einen mit dem Brückenzweig der ersten Halbbrücke 827 verbundenen ersten elektrischen Modulanschluss 833 und einen mit dem Brückenzweig der zweiten Halbbrücke 828 verbundenen zweiten elektrischen Modulanschluss 834 auf.

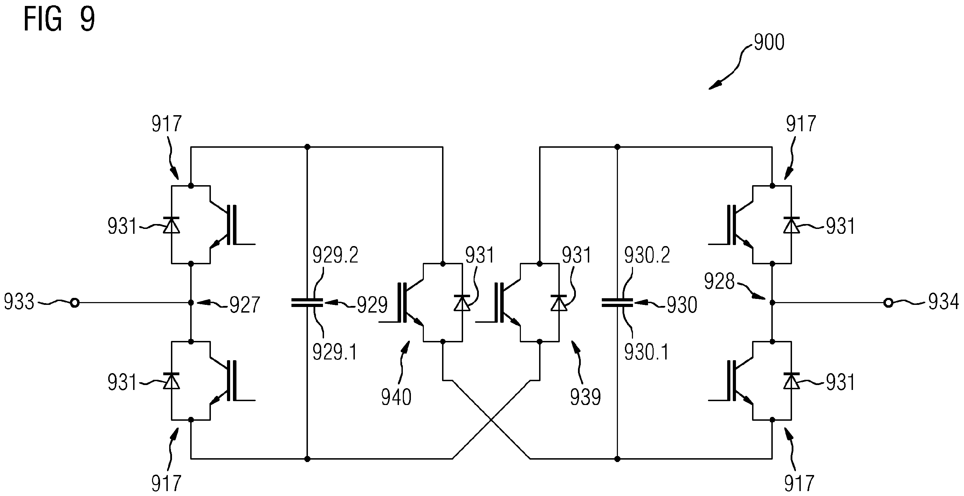

In Figur 9 ist ein weiteres Ausführungsbeispiel eines Moduls 900 des modularen Multilevelstromrichters 3 dargestellt. Beim Modul 900 handelt es sich um ein Modul des Typs "zweites Modul".

Das Modul 900 ist als ein Doppel-Halbbrückenmodul 900 ausgebildet. Dieses Modul 900 weist zwei Halbbrücken 927 und 928, in deren Brückenarmen jeweils ein Halbleiterschalter 917 angeordnet ist, zwei Kondensatoren 929, 930 und zwei Kopplungs-Halbleiterschalter 939, 940 auf. Der erste Kondensator 929 ist parallel zu der ersten Halbbrücke 927 geschaltet. Der zweite Kondensator 930 ist parallel zu der zweiten Halbbrücke 928 geschaltet. Ein erster Kopplungs-Halbleiterschalter 939 ist zwischen einen ersten Anschluss 929.1 des ersten Kondensators 929 und einen zweiten Anschluss 930.2 des zweiten Kondensators 930 geschaltet. Der zweite Kopplungs-Halbleiterschalter 940 ist zwischen einen zweiten Anschluss 929.2 des ersten Kondensators 929 und einen ersten Anschluss 930.1 des zweiten Kondensators 930 geschaltet. Die Kopplungs-Halbleiterschalter 939, 940 verbinden die Kondensatoren 929 und 930 somit kreuzweise miteinander. Das Modul 900 weist ferner einen mit dem Brückenzweig der ersten Halbbrücke 927 verbundenen ersten elektrischen Modulanschluss 933 und einen mit dem Brückenzweig der zweiten Halbbrücke 928 verbundenen zweiten elektrischen Modulanschluss 934 auf.

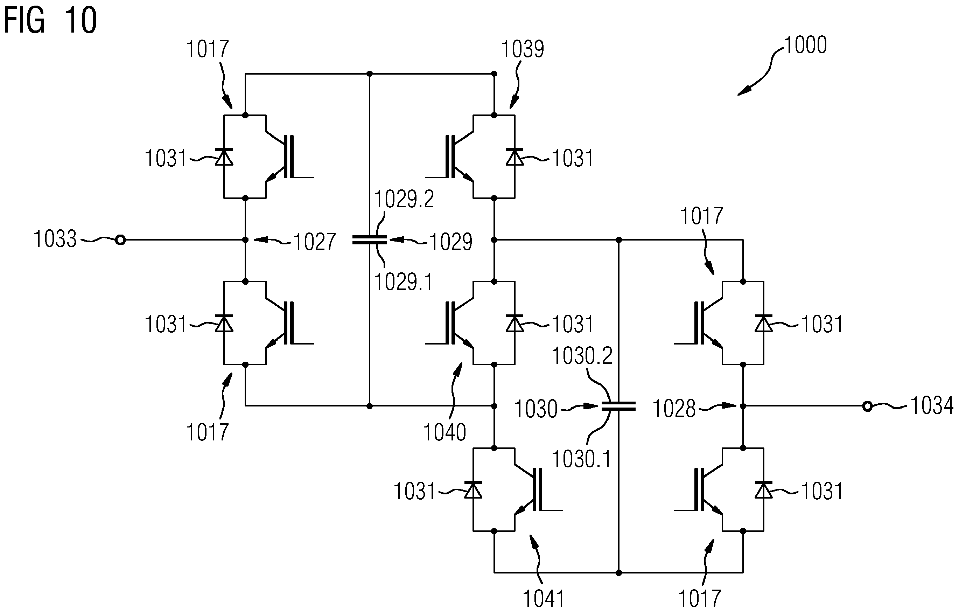

In Figur 10 ist ein weiteres Ausführungsbeispiel eines Moduls 1000 des modularen Multilevelstromrichters 3 dargestellt. Beim Modul 1000 handelt es sich um ein Modul des Typs "zweites Modul".

Das Modul 1000 ist als ein Doppel-Vollbrückenmodul 1000 ausgebildet. Dieses Modul 1000 weist zwei Halbbrücken 1027, 1028, in deren Brückenarmen jeweils ein Halbleiterschalter 1017 angeordnet ist, zwei Kondensatoren 1029, 1030 und drei Kopplungs-Halbleiterschalter 1039, 1040, 1041 auf. Der erste Kondensator 1029 ist parallel zu einer ersten Halbbrücke 1027 geschaltet. Der zweite Kondensator 1030 ist parallel zu der zweiten Halbbrücke 1028 geschaltet. Ein erster Kopplungs-Halbleiterschalter 1039 und ein zweiter Kopplungs-Halbleiterschalter 1040 bilden eine zu dem ersten Kondensator 1029 parallel geschaltete Reihenschaltung. Der zweite Kopplungs-Halbleiterschalter 1040 und ein dritter Kopplungs-Halbleiterschalter 1041 bilden eine zu dem zweiten Kondensator 1030 parallel geschaltete Reihenschaltung. Der dritte Kopplungs-Halbleiterschalter 1041 ist zwischen einen ersten Anschluss 1029.1 des ersten Kondensators 1029 und einen ersten Anschluss 1030.1 des zweiten Kondensators 1030 geschaltet. Der zweite Kopplungs-Halbleiterschalter 1040 ist zwischen den ersten Anschluss 1029.1 des ersten Kondensators 1029 und den zweiten Anschluss 1030.2 des zweiten Kondensators 1030 geschaltet. Der erste Kopplungs-Halbleiterschalter 1039 ist zwischen einen zweiten Anschluss 1029.2 des ersten Kondensators 1029 und den zweiten Anschluss 1030.2 des zweiten Kondensators 1030 geschaltet. Die Halbleiterschalter 1017 der ersten Halbbrücke 1027, der erste Kopplungs-Halbleiterschalter 1039 und der zweite Kopplungs-Halbleiterschalter 1040 bilden somit eine Vollbrücke, deren Brückenzweig den ersten Kondensator 1029 aufweist. Die Halbleiterschalter 1017 der zweiten Halbbrücke 1028, der zweite Kopplungs-Halbleiterschalter 1040 und der dritte Kopplungs-Halbleiterschalter 1041 bilden eine Vollbrücke, deren Brückenzweig den zweiten Kondensator 1030 aufweist. Daher wird das in Figur 10 gezeigte Modul 1000 hier als ein Doppel-Vollbrückenmodul bezeichnet. Das Modul 1000 weist ferner einen mit dem Brückenzweig der ersten Halbbrücke 1027 verbundenen ersten elektrischen Modulanschluss 1033 und einen mit dem Brückenzweig der zweiten Halbbrücke 1028 verbundenen zweiten elektrischen Modulanschluss 1034 auf.

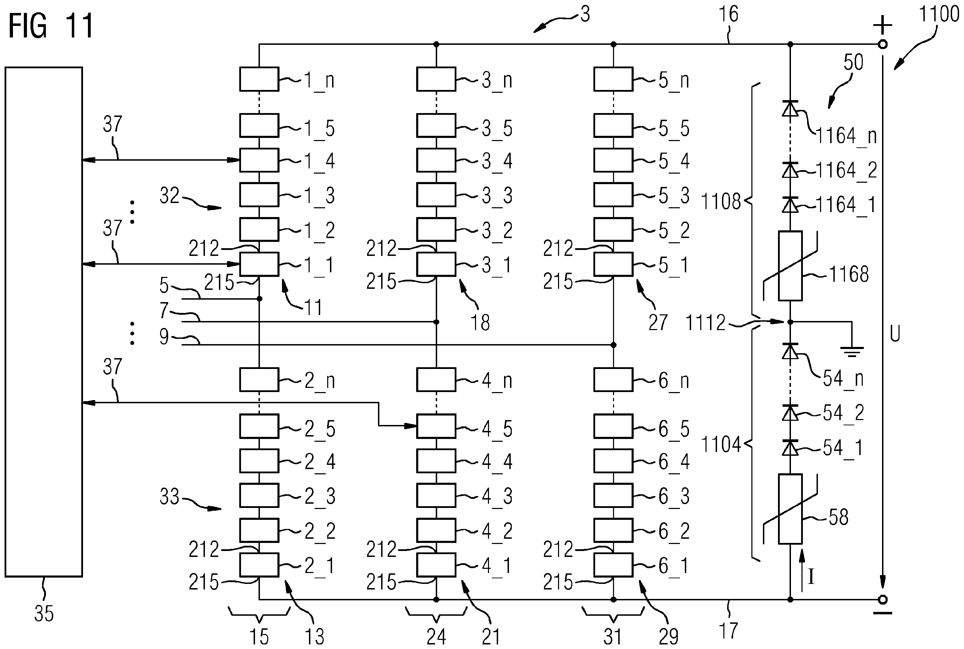

In Figur 11 ist ein weiteres Ausführungsbeispiel einer Anordnung 1100 dargestellt. Diese Anordnung 1100 unterscheidet sich von der Anordnung 1 der Figur 1 lediglich dadurch, dass die Spannungsbegrenzungseinrichtung 50 eine erste Reihenschaltung 1104 aus den Halbleiterventilen 54_1, 54_2, ... 54_n und dem elektrischen Widerstand 58 und eine zweite Reihenschaltung 1108 aus Halbleiterventilen 1164_1, 1164_2, ... 1164_n und einem elektrischen Widerstand 1168 aufweist. Ein erster Anschluss der ersten Reihenschaltung 1104 ist mit dem zweiten Gleichspannungsanschluss 17 verbunden. Ein zweiter Anschluss der ersten Reihenschaltung 1104 ist mit einem ersten Anschluss der zweiten Reihenschaltung 1108 verbunden. Ein zweiter Anschluss der zweiten Reihenschaltung 1108 ist mit dem ersten Gleichspannungsanschluss 16 verbunden. Die Verbindungsstelle/der Verbindungspunkt 1112 zwischen der ersten Reihenschaltung 1104 und der zweiten Reihenschaltung 1108 ist geerdet. Diese Anordnung 1100 ist insbesondere bei einer Symmetrischer-Monopol-Konfiguration einer Hochspannungs-Gleichstrom-Übertragungsanlage mit Vorteil einsetzbar.

Die beschriebene Anordnung und das beschriebene Verfahren weisen eine Reihe von Vorteilen auf. Polaritätsabhängig kann die zwischen den Gleichspannungsanschlüssen des Multilevelstromrichters anliegende Spannung begrenzt bzw. gedämpft werden. Dadurch wird vermieden, dass der Multilevelstromrichter mit zusätzlichen Modulen ausgestattet werden muss, um die unbegrenzte negative Spannung aufzunehmen. Dadurch können Kostenvorteile beim Multilevelstromrichter realisiert werden. Dies ist insbesondere vorteilhaft bei Multilevelstromrichtern, welche Module aufweisen, die nur eine Spannung einer Polarität bereitstellen können (zum Beispiel Halbbrückenmodule) und auch Module, welche Spannungen beider Polaritäten bereitstellen können (beispielsweise Vollbrückenmodule). Bei derartigen Stromrichtern kann insbesondere die Anzahl von Vollbrückenmodulen klein gehalten werden, was zu Kostenvorteilen führt. Derartige Vollbrückenmodule wären nämlich notwendig, um die im Fehlerfall auftretenden negativen Spannungen bereitzustellen. Mit anderen Worten gesagt, wird durch die Spannungsbegrenzungseinrichtung vorteilhafterweise der Stromrichter von der Gleichstromübertragungsstrecke entkoppelt.

Bei der beschriebenen Anordnung ist parallel zu den Gleichspannungsanschlüssen des Multilevelstromrichters eine polaritätsabhängige Spannungsbegrenzungseinrichtung geschaltet, welche eine polaritätsabhängige Spannungsbegrenzung durchführt. Dadurch wird der Maximalwert der (unerwünschten) negativen Spannung begrenzt, wodurch der Multilevelstromrichter geschützt wird. Eine Überdimensionierung des Multilevelstromrichters (durch zusätzliche Module) wird vorteilhafterweise vermieden. Eine derartige polaritätsabhängige Spannungsbegrenzungseinrichtung kann insbesondere als eine Reihenschaltung aus Halbleiterventilen und einem elektrischen Widerstand (insbesondere einem Überspannungsableiter) realisiert werden. Optional kann der Überspannungsableiter jedoch auch weggelassen werden, so dass ausschließlich eine Reihenschaltung von Halbleiterventilen zum Einsatz kommt. Die Spannungsbegrenzungseinrichtung 50 kann auch als eine spannungsasymmetrische Spannungsbegrenzungseinrichtung oder als ein spannungsasymmetrischer Ableiter bezeichnet werden, insbesondere geeignet für Hochspannungsgleichstromübertragungen mit gemischten Gleichstromübertragungsstrecken. Bei derartigen gemischten Gleichstromübertragungsstrecken können beispielsweise durch Reflektionen zwischen den verschiedenen Leiterarten (insbesondere durch Reflektionen zwischen einer Freileitung und einem Kabel) unerwünschte hohe negative Spannungen entstehen. Gerade bei einem Kabel kann die polaritätsabhängige Spannungsbegrenzungseinrichtung mit Vorteil eingesetzt werden, da Kabel empfindlich gegenüber einer plötzlichen Spannungsumkehrung sind.

Es wurde eine Anordnung und ein Verfahren beschrieben, mit denen bei einem Multilevelstromrichter eine polaritätsabhängige Spannungsbegrenzung durchgeführt werden kann.

## Patentansprüche

1. Anordnung die mindestens eine Gleichstromübertragungsstrecke (505), insbesondere eine Hochspannungs-Gleichstromübertragungsstrecke (505), eine Spannungsbegrenzungseinrichtung (50) und einen Multilevelstromrichter (3) aufweist , wobei der Multilevelstromrichter (3) mindestens ein Phasenmodul (15) aufweist, wobei das Phasenmodul (15) einen Wechselspannungsanschluss (5), einen ersten Gleichspannungsanschluss (16) und einen zweiten Gleichspannungsanschluss (17) aufweist, die Spannungsbegrenzungseinrichtung (50) mit dem ersten Gleichspannungsanschluss (16) und dem zweiten Gleichspannungsanschluss (17) elektrisch verbunden ist und die Spannungsbegrenzungseinrichtung (50) in Abhängigkeit von der Polarität einer zwischen dem ersten Gleichspannungsanschluss (16) und dem zweiten Gleichspannungsanschluss (17) auftretenden Spannung (U) diese Spannung zu begrenzen eingerichtet ist, wobei
- der erste Gleichspannungsanschluss (16) und der zweite Gleichspannungsanschluss (17) mit der Gleichstromübertragungsstrecke (505), insbesondere der Hochspannungs-Gleichstromübertragungsstrecke (505), verbunden ist,
- wobei die Gleichstromübertragungsstrecke (505) zwei verschiedene Leiterarten (510, 512) aufweist, welche sich bezüglich ihrer längenbezogenen Kapazität unterscheiden,
- wobei die verschiedenen Leiterarten eine Freileitung (510), ein Kabel (512) und/oder eine gasisolierte Leitung sind, und wobei
- die Spannungsbegrenzungseinrichtung (50) so ausgestaltet ist, dass diese als eine negative Spannung nur eine zwischen dem ersten Gleichspannungsanschluss (16) und dem zweiten Gleichspannungsanschluss (17) auftretende Spannung (U) einer Polarität begrenzt, die durch Reflektionen zwischen den verschiedenen Leiterarten entsteht, und insbesondere als eine positive Spannung eine zwischen dem ersten Gleichspannungsanschluss (16) und dem zweiten Gleichspannungsanschluss (17) auftretende Spannung der entgegengesetzten Polarität im Wesentlichen unverändert lässt,
- die Spannungsbegrenzungseinrichtung (50) mindestens ein Halbleiterventil (54_1), insbesondere eine Reihenschaltung von Halbleiterventilen (54_1 ... 54_n), oder eine steuerbare Funkenstrecke (304) aufweist, und
- in Reihe zu dem mindestens einen Halbleiterventil (54_1 ... 54_n) oder in Reihe zu der Funkenstrecke (304) ein elektrischer Widerstand (58) geschaltet ist, wobei
- der elektrische Widerstand ein Varistor (58) ist.

2. Anordnung nach Anspruch 1, wobei
- die Spannungsbegrenzungseinrichtung (50) so ausgestaltet ist, dass nur bei Auftreten der Spannung (U) der einen Polarität zwischen dem ersten Gleichspannungsanschluss (16) und dem zweiten Gleichspannungsanschluss (17) ein Strom (I) durch die Spannungsbegrenzungseinrichtung (50) fließt.

3. Anordnung nach Anspruch 1 oder 2, wobei
- die Reihenschaltung mindestens 50 Halbleiterventile (54_1 ... 54_n) aufweist.

4. Anordnung nach einem der vorhergehenden Ansprüche, wobei
- das mindestens eine Halbleiterventil (54_1 ... 54_n) eine Diode (54_1), ein Thyristor (254_1) oder ein Transistor ist.

5. Anordnung nach einem der vorhergehenden Ansprüche, wobei
- das Kabel ein kunststoffisoliertes Kabel (512), ein ölisoliertes Kabel oder ein masseisoliertes Kabel ist.

6. Anordnung nach einem der vorhergehenden Ansprüche, wobei
- das Phasenmodul (15) eine Mehrzahl von Modulen (1_1 ... 2_n) aufweist, die elektrisch in Reihe geschaltet sind.

7. Anordnung nach Anspruch 6, wobei
- ein erstes Modul (600) einen ersten elektrischen Modulanschluss (612), einen zweiten elektrischen Modulanschluss (615), ein erstes elektronisches Schaltelement (602), ein zweites elektronisches Schaltelement (606) und einen elektrischen Energiespeicher (610) aufweist, wobei das Modul so ausgestaltet ist, dass in Abhängigkeit von einer Ansteuerung des ersten elektronischen Schaltelements (602) und/oder des zweiten elektronischen Schaltelements (606) an dem ersten elektrischen Modulanschluss (612) und dem zweiten elektrischen Modulanschluss (615) eine Spannung ausschließlich einer Polarität oder die Spannung Null ausgegeben werden kann, und/oder
- ein zweites Modul (700) einen ersten elektrischen Modulanschluss (612), einen zweiten elektrischen Modulanschluss (715), ein erstes elektronisches Schaltelement (602), ein zweites elektronisches Schaltelement (606), ein drittes elektronisches Schaltelement (702), ein viertes elektronisches Schaltelement (706) und einen elektrischen Energiespeicher (610) aufweist, wobei das Modul so ausgestaltet ist, dass in Abhängigkeit von einer Ansteuerung des ersten elektronischen Schaltelements (602), des zweiten elektronischen Schaltelements (606), des dritten elektronischen Schaltelements (702) und/oder des vierten elektronischen Schaltelements (706) an dem ersten elektrischen Modulanschluss (612) und dem zweiten elektrischen Modulanschluss (715) eine Spannung einer Polarität, eine Spannung entgegengesetzter Polarität oder die Spannung Null ausgegeben werden kann.

8. Anordnung nach Anspruch 6 oder 7, wobei
- das erste Modul ein Halbbrückenmodul (600) ist, bei dem das erste elektronische Schaltelement (602) und das zweite elektronische Schaltelement (606) in einer Halbbrückenschaltung angeordnet sind.

9. Anordnung nach einem der Ansprüche 6 bis 8, wobei
- das zweite Modul ein Modul (800, 900) ist, bei dem die elektronischen Schaltelemente (817, 917) in mehreren Halbbrückenschaltungen angeordnet sind.

10. Anordnung nach einem der Ansprüche 6 bis 9, wobei
- das zweite Modul ein Vollbrückenmodul (700) ist, bei dem das erste elektronische Schaltelement (602), das zweite elektronische Schaltelement (606), das dritte elektronische Schaltelement (702) und das vierte elektronische Schaltelement (706) in einer Vollbrückenschaltung angeordnet sind.

11. Anordnung nach einem der Ansprüche 6 bis 10, wobei
- das zweite Modul ein Modul (800, 900, 1000) ist, das zusätzlich zu dem elektrischen Energiespeicher (829, 929, 1029) einen weiteren elektrischen Energiespeicher (830, 930, 1030) aufweist.

12. Anordnung nach einem der Ansprüche 6 bis 11, wobei
- das Phasenmodul (15) erste Module (600) und zweite Module (700) aufweist, die elektrisch in Reihe geschaltet sind.

13. Anordnung nach einem der vorhergehenden Ansprüche, wobei
- der Multilevelstromrichter (3) zwei oder drei Phasenmodule (15, 24, 31) aufweist, die an ihrem ersten Gleichspannungsanschluss (16) und zweiten Gleichspannungsanschluss (17) parallelgeschaltet sind.

14. Hochspannungs-Gleichstrom-Übertragungsanlage (500) mit einer Anordnung (1) nach einem der Ansprüche 1 bis 13.

15. Verfahren zum polaritätsabhängigen Begrenzen einer zwischen einem ersten Gleichspannungsanschluss (16) und einem zweiten Gleichspannungsanschluss (17) einer Anordnung nach Anspruch 1 auftretenden Spannung, wobei der erste Gleichspannungsanschluss (16) und der zweite Gleichspannungsanschluss (17) mit einer Gleichstromübertragungsstrecke (505), insbesondere einer Hochspannungs-Gleichstromübertragungsstrecke (505), verbunden ist, wobei die Gleichstromübertragungsstrecke (505) zwei verschiedene Leiterarten (510, 512) aufweist, welche sich bezüglich ihrer längenbezogenen Kapazität unterscheiden, und wobei die verschiedenen Leiterarten eine Freileitung (510), ein Kabel (512) und/oder eine gasisolierte Leitung sind, wobei bei dem Verfahren
- mittels einer Spannungsbegrenzungseinrichtung (50), die mit dem ersten Gleichspannungsanschluss (16) und dem zweiten Gleichspannungsanschluss (17) elektrisch verbunden ist, als eine negative Spannung nur eine zwischen dem ersten Gleichspannungsanschluss (16) und dem zweiten Gleichspannungsanschluss (17) auftretende Spannung (U) einer Polarität begrenzt wird, die durch Reflektionen zwischen den verschiedenen Leiterarten entsteht, und insbesondere als eine positive Spannung eine zwischen dem ersten Gleichspannungsanschluss (16) und dem zweiten Gleichspannungsanschluss (17) auftretende Spannung der entgegengesetzten Polarität im Wesentlichen unverändert gelassen wird, wobei
- die Spannungsbegrenzungseinrichtung (50) mindestens ein Halbleiterventil (54_1), insbesondere eine Reihenschaltung von Halbleiterventilen (54_1 ... 54_n), oder eine steuerbare Funkenstrecke (304) aufweist, und
- in Reihe zu dem mindestens einen Halbleiterventil (54_1 ... 54_n) oder in Reihe zu der Funkenstrecke (304) ein elektrischer Widerstand (58) geschaltet ist, wobei
- der elektrische Widerstand ein Varistor (58) ist.

16. Verfahren nach Anspruch 15, wobei
- nur bei Auftreten der Spannung der einen Polarität zwischen dem ersten Gleichspannungsanschluss (16) und dem zweiten Gleichspannungsanschluss (17) ein Strom (I) durch die Spannungsbegrenzungseinrichtung (50) fließt und dadurch die Spannung der einen Polarität begrenzt wird.

## Claims

1. Assembly having at least one direct-current transmission link (505), in particular a high-voltage direct-current transmission link (505), a voltage limiting device (50) and a multilevel power converter (3), wherein the multilevel power converter (3) comprises at least one phase module (15), wherein the phase module (15) comprises an AC voltage terminal (5), a first DC voltage terminal (16) and a second DC voltage terminal (17), the voltage limiting device (50) is electrically connected to the first DC voltage terminal (16) and to the second DC voltage terminal (17) and the voltage limiting device (50) is configured to limit a voltage (U) that occurs between the first DC voltage terminal (16) and the second DC voltage terminal (17) depending on the polarity of said voltage, wherein
- the first DC voltage terminal (16) and the second DC voltage terminal (17) are connected to the direct-current transmission link (505), in particular the high-voltage direct-current transmission link (505),
- wherein the direct-current transmission link (505) comprises two different conductor types (510, 512), which differ with regard to their capacitance per unit length,
- wherein the different conductor types are an overhead line (510), a cable (512) and/or a gas-insulated line, and
wherein
- the voltage limiting device (50) is configured so that it limits as a negative voltage only a voltage (U) of one polarity that occurs between the first DC voltage terminal (16) and the second DC voltage terminal (17), which results from reflections between the various conductor types, and in particular leaves substantially unchanged as a positive voltage a voltage of the opposite polarity that occurs between the first DC voltage terminal (16) and the second DC voltage terminal (17),
- the voltage limiting device (50) comprises at least one semiconductor valve (54_1), in particular a series circuit formed by semiconductor valves (54_1, ..., 54_n), or a controllable spark gap (304), and
- an electrical resistor (58) is connected in series with the at least one semiconductor valve (54_1, ..., 54 n) or in series with the spark gap (304), wherein
- the electrical resistor is a varistor (58).

2. Assembly according to Claim 1, wherein
- the voltage limiting device (50) is configured such that it is only when the voltage (U) of said one polarity occurs between the first DC voltage terminal (16) and the second DC voltage terminal (17) that a current (I) flows through the voltage limiting device (50).

3. Assembly according to Claim 1 or 2, wherein
- the series circuit comprises at least 50 semiconductor valves (54_1, ..., 54_n).

4. Assembly according to one of the preceding claims, wherein
- the at least one semiconductor valve (54_1, ..., 54_n) is a diode (54_1), a thyristor (254_1) or a transistor.

5. Assembly according to one of the preceding claims, wherein
- the cable is a plastic-insulated cable (512), an oil-insulated cable or a mass-impregnated cable.

6. Assembly according to one of the preceding claims, wherein
- the phase module (15) comprises a plurality of modules (1_1, ..., 2_n) which are electrically connected in series.

7. Assembly according to Claim 6, wherein
- a first module (600) comprises a first electrical module terminal (612), a second electrical module terminal (615), a first electronic switching element (602), a second electronic switching element (606) and an electrical energy storage device (610), wherein the module is configured so that, depending on the actuation of the first electronic switching element (602) and/or the second electronic switching element (606), a voltage of exclusively one polarity or zero voltage can be output at the first electrical module terminal (612) and the second electrical module terminal (615), and/or
- a second module (700) comprises a first electrical module terminal (612), a second electrical module terminal (715), a first electronic switching element (602), a second electronic switching element (606), a third electronic switching element (702), a fourth electronic switching element (706) and an electrical energy storage device (610), wherein the module is configured so that, depending on the actuation of the first electronic switching element (602), the second electronic switching element (606), the third electronic switching element (702) and/or the fourth electronic switching element (706), a voltage of one polarity, a voltage of the opposite polarity or zero voltage can be output at the first electrical module terminal (612) and the second electrical module terminal (715).

8. Assembly according to Claim 6 or 7, wherein
- the first module is a half-bridge module (600) in which the first electronic switching element (602) and the second electronic switching element (606) are arranged in a half-bridge circuit.

9. Assembly according to one of Claims 6 to 8, wherein
- the second module is a module (800, 900) in which the electronic switching elements (817, 917) are arranged in a plurality of half-bridge circuits.

10. Assembly according to one of Claims 6 to 9, wherein
- the second module is a full-bridge module (700) in which the first electronic switching element (602), the second electronic switching element (606), the third electronic switching element (702) and the fourth electronic switching element (706) are arranged in a full-bridge circuit.

11. Assembly according to one of Claims 6 to 10, wherein
- the second module is a module (800, 900, 1000) which, in addition to the electrical energy storage device (829, 929, 1029), comprises a further electrical energy storage device (830, 930, 1030).

12. Assembly according to one of Claims 6 to 11, wherein
- the phase module (15) comprises first modules (600) and second modules (700) which are electrically connected in series.

13. Assembly according to one of the preceding claims, wherein
- the multilevel power converter (3) comprises two or three phase modules (15, 24, 31) which are connected in parallel at their first DC voltage terminal (16) and second DC voltage terminal (17).

14. High-voltage direct-current transmission installation (500) having an assembly (1) according to one of Claims 1 to 13.

15. Method for polarity-dependent limiting of a voltage that occurs between a first DC voltage terminal (16) and a second DC voltage terminal (17) of an assembly according to Claim 1, wherein the first DC voltage terminal (16) and the second DC voltage terminal (17) are connected to a direct-current transmission link (505), in particular a high-voltage direct-current transmission link (505), wherein the direct-current transmission link (505) comprises two different conductor types (510, 512), which differ with regard to their capacitance per unit length, and wherein the different conductor types are an overhead line (510), a cable (512) and/or a gas-insulated line, wherein, in the method,
- a voltage limiting device (50), which is electrically connected to the first DC voltage terminal (16) and the second DC voltage terminal (17), is used to limit as a negative voltage only a voltage (U) of one polarity that occurs between the first DC voltage terminal (16) and the second DC voltage terminal (17), which results from reflections between the various types of conductor, and in particular to leave substantially unchanged as a positive voltage a voltage of the opposite polarity that occurs between the first DC voltage terminal (16) and the second DC voltage terminal (17), wherein
- the voltage limiting device (50) comprises at least one semiconductor valve (54_1), in particular a series circuit formed by semiconductor valves (54_1, ..., 54_n), or a controllable spark gap (304), and
- an electrical resistor (58) is connected in series with the at least one semiconductor valve (54_1, ..., 54 n) or in series with the spark gap (304), wherein
- the electrical resistor is a varistor (58).

16. Method according to Claim 15, wherein
- it is only when the voltage of said one polarity occurs between the first DC voltage terminal (16) and the second DC voltage terminal (17) that a current (I) flows through the voltage limiting device (50) and the voltage of said one polarity is thereby limited.

## Revendications

1. Agencement, qui comporte au moins une section (505) de transport de courant continu, en particulier une section (505) de transport de courant continu en haute tension, un dispositif (50) de limitation de la tension et un convertisseur (3) à plusieurs niveaux, dans lequel le convertisseur (3) à plusieurs niveaux a au moins un module (15) de phase, dans lequel le module (15) de phase a une borne (5) de tension alternative, une première borne (16) de tension continue et une deuxième borne (17) de tension continue, le dispositif (50) de limitation de la tension est relié électriquement à la première borne (16) de tension continue et à la deuxième borne (17) de tension continue et le dispositif (50) de limitation de la tension est agencé pour limiter, en fonction de la polarité d'une tension (U) se produisant entre la première borne (16) de tension continue et la deuxième borne (17) de tension continue, cette tension, dans lequel
- la première borne (16) de tension continue et la deuxième borne (17) de tension continue sont reliées à la section (505) de transport de courant continu, en particulier à la section (505) de transport de courant continu en haute tension,
- dans lequel la section (505) de transport de courant continu a deux types (510, 512) de conducteurs différents, qui se distinguent en ce qui concerne leur capacité rapportée à la longueur,
- dans lequel les types de conducteurs différents sont une ligne (510) aérienne, un câble (512) et/ou une ligne à isolation par du gaz, et dans lequel
- le dispositif (50) de limitation de la tension est conformé de manière à ce que celui-ci limite, en tant que tension négative, seulement une tension (U), se produisant entre la première borne (16) de tension continue et la deuxième borne (17) de tension continue, d'une polarité, qui se crée par des réflexions entre les types de conducteurs différents et, en particulier, laisse sensiblement inchangée, en tant que tension positive, une tension de polarité opposée, se produisant entre la première borne (16) de tension continue et la deuxième borne (17) de tension continue,
- le dispositif (50) de limitation de la tension comporte au moins une soupape (54_1) à semiconducteur, en particulier un circuit série de soupapes (54_1 ... 54_n) à semiconducteur ou un éclateur (304) pouvant être commandé, et
- il est monté en série, avec la au moins une soupape (54_1 ... 54_n) à semiconducteur ou en série avec l'éclateur (304), un résistance (58) électrique, dans lequel
- la résistance électrique est une varistance (58).

2. Agencement suivant la revendication 1, dans lequel
- le dispositif (50) de limitation de la tension est conformé de manière à ce qu'un courant (I) passe dans le dispositif (50) de limitation de la tension seulement à l'apparition de la tension (U) de la une polarité entre la première borne (16) de tension continue et la deuxième borne (17) de tension continue.

3. Agencement suivant la revendication 1 ou 2, dans lequel
- le circuit série comporte au moins 50 soupapes (54_1 ... 54_n) à semiconducteur.

4. Agencement suivant l'une des revendications précédentes, dans lequel
- la au moins une soupape (54_1 ... 54_n) à semiconducteur est une diode (54_1), un thyristor (254_1) ou un transistor.

5. Agencement suivant l'une des revendications précédentes, dans lequel
- le câble est un câble (512) isolé par de la matière plastique, un câble isolé par de l'huile ou un câble isolé à la masse.

6. Agencement suivant l'une des revendications précédentes, dans lequel
- le module (15) de phase a une pluralité de modules (1_1 ... 2_n), qui sont montés électriquement en série.

7. Agencement suivant la revendication 6, dans lequel
- un premier module (600) a une première borne (612) électrique de module, une deuxième borne (615) électrique de module, un premier élément (602) électronique de coupure, un deuxième élément (606) électronique de coupure et un accumulateur (610) d'énergie électrique, dans lequel le module est conformé de manière à pouvoir appliquer, par une commande du premier élément (602) électronique de coupure et/ou du deuxième élément (606) électronique de coupure à la première borne (612) électrique de module et à la deuxième borne (615) électrique de module, une tension exclusivement d'une polarité ou la tension zéro, et/ou
- un deuxième module (700) a une première borne (612) électrique de module, une deuxième borne (715) électrique de module, un premier élément (602) électronique de coupure, un deuxième élément (606) électronique de coupure, un troisième élément (702) électronique de coupure et un quatrième élément (706) électronique de coupure et un accumulateur (610) d'énergie, dans lequel le module est conformé de manière à pouvoir appliquer, en fonction d'une commande du premier élément (602) électronique de coupure, du deuxième élément (606) électronique de coupure, du troisième élément (702) électronique de coupure et/ou du quatrième élément (706) électronique de coupure à la première borne (612) électrique de module et à la deuxième borne (715) électrique de module, une tension d'une polarité, une tension d'une polarité opposée ou la tension zéro.

8. Agencement suivant la revendication 6 ou 7, dans lequel
- le premier module est un module (600) à demi-pont, dans lequel le premier élément (602) électronique de coupure et le deuxième élément (606) électronique de coupure sont montés en un circuit en demi-pont.

9. Agencement suivant l'une des revendications 6 à 8, dans lequel
- le deuxième module est un module (800, 900), dans lequel les éléments (817, 917) électroniques de coupure sont montés en plusieurs circuits en demi-pont.

10. Agencement suivant l'une des revendications 6 à 9, dans lequel
- le deuxième module est un module (700) à pont complet, dans lequel le premier élément (602) électronique de coupure, le deuxième élément (606) électronique de coupure, le troisième élément (702) électronique de coupure et le quatrième élément (706) électronique de coupure sont montés en un circuit à pont complet.

11. Agencement suivant l'une des revendications 6 à 10, dans lequel
- le deuxième module est un module (800, 900, 1000), qui a en plus de l'accumulateur (829, 929, 1029) d'énergie électrique, un autre accumulateur (830, 930, 1030) d'énergie électrique.

12. Agencement suivant l'une des revendications 6 à 11, dans lequel
- le module (15) de phase a un premier module (600) et un deuxième module (700), qui sont montés électriquement en série.

13. Agencement suivant l'une des revendications précédentes, dans lequel
- le convertisseur (3) à plusieurs niveaux a deux ou trois modules (15, 24, 31) de phase, qui sont montés en parallèle à sa première borne (16) de tension continue et deuxième borne (17) de tension continue.

14. Installation (500) de transport de courant continu en haute tension, comprenant un agencement (1) suivant l'une des revendications 1 à 13.

15. Procédé de limitation en fonction de la polarité d'une tension se produisant entre une première borne (16) continue et une deuxième borne (17) de tension continue d'un agencement suivant la revendication 1, dans lequel la première borne (16) de tension continue et la deuxième borne (17) de tension continue sont reliées à une section (505) de transport de courant continu, en particulier une section (505) de transport de courant continu en haute tension, dans lequel la section (505) de transport de courant continu a deux types (510, 512) de conducteurs différents, qui se distinguent en ce qui concerne leur capacité rapportée à la longueur, et dans lequel les types de conducteurs différents sont une ligne (510) aérienne, un câble (512) et/ou une ligne à isolation par du gaz, dans lequel, dans le procédé
- au moyen d'un dispositif (50) de limitation de la tension, qui est relié électriquement à la première borne (16) de tension continue et à la deuxième borne (17) de tension continue, on limite, sous la forme d'une tension négative, seulement une tension (U), se produisant entre la première borne (16) de tension continue et la deuxième borne (17) de tension continue, d'une polarité, qui se crée par des réflexions entre les différents types de conducteurs, et notamment on laisse inchangée, sous la forme d'une tension positive, une tension de polarité opposée se produisant entre la première borne (16) de tension continue et la deuxième borne (17) de tension continue, dans lequel
- le dispositif (50) de limitation de la tension a au moins une soupape (54_1) à semiconducteur, en particulier un circuit série de soupapes (54_1 ... 54_n) à semiconducteur ou un éclateur (304) pouvant être commandé, et
- il est monté en série, avec la au moins une soupape (54_1 ... 54_n) à semiconducteur ou en série avec l'éclateur (304), un résistance (58) électrique, dans lequel
- la résistance électrique est une varistance (58).

16. Procédé suivant la revendication 15, dans lequel
- seulement à l'apparition de la tension de la une polarité entre la première borne (16) de tension continue et la deuxième borne (17) de tension continue, un courant (I) passe dans le dispositif (50) de limitation de la tension, et on limite ainsi la tension de la une polarité.
